Europäisches Patentamt

(19) European Patent Office

Office européen des brevets

(11) Publication number: **0 005 917**

**A1**

(12) # EUROPEAN PATENT APPLICATION

(21) Application number: **79300788.1**

(22) Date of filing: **09.05.79**

(51) Int. Cl.²: **A 01 N 9/02**

(30) Priority: **30.05.78 GB 2436078**
**03.08.78 GB 3208078**

(43) Date of publication of application:
**12.12.79 Bulletin 79/25**

(84) Designated Contracting States:
**AT BE CH DE FR GB IT LU NL SE**

(71) Applicant: **FISONS LIMITED**
**Fison House 9 Grosvenor Street**
**London(GB)**

(72) Inventor: **Griffiths, Windsor**
**3 Rhugarve Gardens**
**Linton Cambridgeshire(GB)**

(74) Representative: **Murphy, Finnbarr et al,**
**Fisons Limited Fison House Princes Street**
**Ipswich 1P1 1QH(GB)**

(54) Herbicidal method and mixtures of herbicidal heterocyclic compounds.

(57) There is provided a method of combating weeds especially in grass grown for forage or turf, which method comprises applying to the locus an effective amount of
(a) 2-ethoxy-2,3-dihydro-3,3-dimethylbenzofuran-5-yl methane-sulphonate, together or sequentially with
(b) one or more of asulam (or a salt thereof), benazolin, bensulide, bromofenoxim, bromoxynil octanoate, chlortoluron, cyanazine, dichlorprop or a salt, ester or amide thereof, dinoseb acetate, dinoterb, ethalfuralin, flamprop-isopropyl, glyphosate, isomethiozin, methabenzthiazuron, prometon, 2,4,5-T or a salt, ester or amide thereof, and N-(1-ethylpropyl)-2,6-dinitro-3,4-xylidine(pendimethalin), or sequentially with
(c) one or more of benefin, benzoylprop-ethyl, bromoxynil, chlorfenprop-methyl, cyanazine, dicamba, 2,4-D or a salt, ester or amide thereof, 2,4-DB or a salt, ester or amide thereof, difenzoquat, fenoprop, MCPA or a salt, ester or amide thereof, MCPB or a salt, ester or amide thereof, mecoprop or a salt, ester or amide thereof, neburon, perfluidone, picloram, simazine, 2,4,5-TP or a salt, ester of amide thereof, and 2,3,6-TBA or a salt, ester of amide thereof.

24360/78

The present invention relates to a method of combating weeds and certain compositions suitable for use in that method.

The invention provides a method of combating weeds at a locus infested or liable to be infested with them, which method comprises applying to the locus an effective amount of

(a)  2-ethoxy-2,3-dihydro-3,3-dimethylbenzofuran-5-yl methanesulphonate, together or sequentially with

(b)  one or more of asulam (or a salt thereof), benazolin, bensulide, bromofenoxim, bromoxynil octanoate, chlortoluron, cyanazine, dichlorprop or a salt, ester or amide thereof, dinoseb acetate, dinoterb, ethalfuralin, flamprop-isopropyl, glyphosate, isomethiozin, methabenzthiazuron, prometon, 2,4,5-T or a salt, ester or amide thereof, and N-(1-ethylpropyl)-2,6-dinitro-3,4-xylidine(pendimethalin), or sequentially with

(c)  one or more of benefin, benzoylprop-ethyl, bromoxynil, chlorfenprop-methyl, cyanazine, dicamba, 2,4-D or a salt, ester or amide thereof, 2,4-DB or a salt, ester or amide thereof, difenzoquat, fenoprop, MCPA or a salt, ester or amide thereof, MCPB or a salt, ester or amide thereof, mecoprop or a salt, ester or amide thereof, neburon, perfluidone, picloram, simazine, 2,4,5-TP or a salt, ester or amide thereof, and 2,3,6-TBA or a salt, ester or amide thereof.

All common names as used herein are as used in the Pesticide Manual, 5th Edition, 1977, issued by the British Crop Protection Council.

In addition, the invention provides a herbicidal composition comprising (a) and (c), said mixtures being synergistic.

It has been found that (a) and (b) or (c) seem to render weeds more susceptible to the action of the other, so that the present method is unexpectedly advantageous, especially when used in the control of weeds in grassland. The method can be used to combat a wider range of weed species than when (a), (b) or (c) is used alone. Components (a), (b) and (c) when used in combination are also effective at lower dosage rates than those at which (a), (b) and (c) alone are effective.

Preferably, component (b) is the sodium or potassium salt of asulam, or is methabenzthiazuron, cyanazine or glyphosate.

Each of the two essential components (a) and (b) or (c) should desirably be present in an amount of from 1 to 99% by weight of the total amount of the two essential components which is applied. The 2-ethoxy-2,3-dihydro-3,3-dimethylbenzofuran-5-yl methanesulphonate is more preferably present in an amount of from 15 to 95%, especially 25 to 90%, and particularly 50 to 80%, by weight of the total amount of the essential components which is applied. The optimum ratio of the two components depends, however, on the identity of component (b) or (c).

In the present method usually 0.1-6 kg, preferably 0.5-3.5 kg, and especially 0.9-2.1 kg, of component (a) are applied per hectare.

At such rates of application, the preferred rates of application for the compounds constituting component (b) or (c) are as follows:

| Compound | rate (kg/ha) | Compound | rate (kg/ha) |
|---|---|---|---|
| asulam | 0.2-2.4 | ethalfuralin | 0.1-2.0 |
| benazolin | 0.05-1.5 | fenoprop | 0.05-2.0 |
| benefin | 0.2-2.0 | flampropisopropyl | 0.1-2.0 |
| bensulide | 1.0-20 | glyphosate | 0.2-5.0 |
| benzoylprop-ethyl | 0.2-2.0 | isomethiozin | 0.5-4.0 |
| bromofenoxim | 0.2-2.0 | MCPA | 0.01-2.0 |
| bromoxynil | 0.05-1.5 | MCPB | 0.01-3.0 |
| bromoxynil octanoate | 0.05-1.5 | mecoprop | 0.01-3.0 |
| chlorfenprop-methyl | 0.2-5.0 | methabenzthiazuron | 0.1-3.0 |
| chlortoluron | 0.1-4.0 | neburon | 0.5-4.0 |
| cyanazine | 0.1-3.0 | perfluidone | 0.5-4.5 |
| dicamba | 0.01-0.5 | picloram | 0.005-0.5 |
| 2,4-D | 0.01-2.0 | promethon | 0.1-5.0 |
| 2,4-DB | 0.01-4.0 | simazine | 0.1-2.0 |
| dichlorprop | 0.01-4.0 | 2,4,5-T | 0.05-2.0 |
| difenzoquat | 0.2-2.0 | 2,3,6-TBA | 0.005-0.1 |
| dinoseb acetate | 0.1-4.0 | pendimethalin | 0.2-2.0 |
| dinoterb | 0.1-2.0 | | |

From the above, it may be seen that in general from 0.01-4 kg, preferably 0.1-2 kg, especially 0.2-1.5 kg of (b) or (c) are applied per hectare.

Component (a) may be applied as desired before or after component (c).

The essential components (a) and (b) or (c) can be applied in compositions which can be prepared by admixing the ingredients. Usually the compositions are initially produced in the form of concentrates, e.g. containing 0.5 1 85% _in toto_ of the essential components, and these are diluted with water or a hydrocarbon, usually water, for application, generally such that the concentration _in toto_ of the essential components is 0.05 - 4%.

The compositions normally contain a surface active agent and/or a carrier.

The carrier in the concentrate may be a solid, which may be finely divided. Examples of suitable solids are clays, sand, mica, chalk, attapulgite, diatomite, perlite and sepiolite, and synthetic solid carriers, e.g. silicas, silicates and lignosulphonates.

Wettable powders soluble or dispersable in water may be formed by admixing the essential herbicides with or without a carrier with a surface active agent.

The carrier is preferably however, a liquid, e.g. water (e.g. water used to dilute a concentrate for application). If water is employed as carrier in a concentrate, an organic solvent may also be present as carrier, though this is not usually employed. A concentrate containing water as carrier may advantageously also contain a surface active agent.

The carrier may be a liquid other than water, for example an organic solvent, usually a water-immiscible solvent, e.g. a hydrocarbon which boils within the range 130-270$^o$C, in which the essential herbicides are dissolved or suspended. A concentrate containing an organic solvent suitable also contain a surface active agent so that the concentrates acts as a self-emulsifiable oil on admixture with water.

The term 'surface active agent' is used in the broad sense to include materials variously called emulsifying agents, dispersing agents and wetting agents. Such agents are well known in the herbicide art.

The surface active agents used may comprise anionic surface active agents, for example mono- or di-esters of phosphoric acid with fatty alcohol ethoxylates or salts of such esters, fatty alcohol sulphates such as sodium dodecyl sulphate, ethoxylated fatty alcohol sulphates, ethoxylated alkylphenol sulphates, lignin sulphonates, petroleum sulphonates, alkylaryl sulphonates such as alkyl-benzene sulphonates or lower alkyl-naphthalene sulphonates, salts of sulphonated naphthalene-formaldehyde condensates, salts of sulphonated phenol-formaldehyde condensates, or more complex sulphonates such as the amide sulphonates, e.g. the sulphonated condensation product of oleic acid and N-methyl taurine or the dialkyl sulphosuccinates e.g. the sodium sulphonate of dioctyl succinate.

The surface active agents may also comprise non-ionic agents, for example condensation products of fatty acid esters, fatty alcohols, fatty acid amides or alkyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quarternary ammonium compounds such as cetyl trimethylammonium bromide, or ethoxylated tertiary fatty amines.

Preferred surface active agents include ethoxylated fatty alcohol sulphates, lignin sulphonates, alkyl-aryl sulphonates, salts of sulphonated naphthalene-formaldehyde condensates, salts of sulphonated phenol-formaldehyde condensates, sodium oleoyl N-methyltauride, dialkyl sulphosuccinates, alkyl phenol ethoxylates, and fatty alkyl ethoxylates.

Where the components (a) and (b) or (c) are employed sequentially, component (a) is preferably applied before component (b) or (c) where that component is or includes asulam, benazolin, benzoylprop-ethyl, bromofenoxim, chlorfenprop-methyl, dicamba, 2,4-D, 2,4-DB, dichlorprop, difenzoquat, fenoprop, flamprop-isopropyl, MCPA, MCPB, mecoprop, picloram, 2,4,5-T or 2,3,6-TBA, and after component (b) or (c) where that component is or includes benefin, bensulide, glyphosate, methabenzthiazuron or perfluidone.

Component (a), whether as part of a mixture or in a sequential programme, is preferably applied in the low-growth stage of the crop, i.e. in the autumn, winter or early spring. Where component (b) or (c) follows component (a), (b) or (c) is preferably applied in the spring or early summer.

A further herbicide can be used in the present method besides (a) and (b) or (c). Thus, a further herbicide may be applied with component (a) or component (b) or (c), or separately. Usually the proportions of (a) to the further herbicide are from 1:10 to 10:1 by weight, preferably from 1:3 to 3:1 by weight. Examples of such further herbicides include phenoxyaliphatic acids or functional derivatives thereof, substituted ureas (e.g. monuron, diuron, monolinuron, linuron, and benzthiazuron), triazines (e.g. atrazine, trietazine, prometryne and metamitron), DNOC, PCP, ioxynil, dichlobenil, paraquat, dalapon, TCA, barban, EPTC, butylate, diallate, allidochlor, propachlor, bromacil, lenacil, maleic hydrazide, aminotriazole, trifluralin, S,S,S-tributyl phosphorotrithioate, 3-(1-[ethoxyamino]propylidene)-6-ethyl-2H-pyran-2,4(3H)-dione, phenmedipham, azolamid, triallate, propamide, carbetamide, diphenamid, pebulate, benfluralin, metobromuron, pyrazon, N-(chloroacetyl)-N-(2,6-diethylphenyl) glycine ethyl ester or N-(phosphonomethyl)-glycine, especially phenmedipham, lenacil, pyrazon, dalapon or TCA.

Fertilizers or pesticides other than herbicides can also be employed with the present essential herbicides.

The present method may be employed on plants, the soil, land or aquatic areas. The method may be employed against a wide range of weeds, e.g. Polygonus spp, mayweeds (e.g. Matricaria spp and Anthemis spp), chickweed (Stellaria media), charlock (Sinapis arvensis), blackgrass (Alopecurus myosuroides), Poa Annua, volunteer cereals and Avena fatua.

The present method is preferably used for selectively combating weeds at a locus in which a crop is growing or is to grow.

The crop in which the present method most advantageously employed to combat weeds is preferably grass, including turf, but it may be employed in other crops, including sugar beet, red beet, fodder beet, mangolds, onions, tobacco and sunflowers, provided that component (b) or (c) is safe to the crop concerned.

The invention is further described, though only by way of illustration, in the following Examples.

Example 1

A 20% w/v emulsifiable concentrate of 2-ethoxy-2,3-dihydro-3,3-dimethylbenzofuran-5-yl methanesulphonate ('Nortron') was tank mixed with a 40% aqueous solution of the sodium salt of asulam ('Asulox') so as to give 0.8 parts by weight of the sodium salt per part by weight of 2-ethoxy-2,3-dihydro-3,3-dimethylbenzofuran-5-yl methanesulphonate. The mixture was then diluted with water to give a concentration of the sodium salt therein of 0.8 kg per 450 litres of solution and the diluted mixture was applied at a rate of 450 1/ha to grassland. Excellent weed control of broad-leaved weeds (blw) and annual grasses, including annual meadow grass, blackgrass and barley grass, was obtained.

Example 2

A 20% w/v emulsifiable concentrate of 2-ethoxy-2,3-dihydro-3,3-dimethylbenzofuran-5-yl methanesulphonate was tank mixed with a suspension in water of a wettable powder of cyanazine ('Bladex') so as to give a ratio by weight of active ingredients of 1:1. The mixture was then diluted with water to give a concentration of the methanesulphonate therein of 0.25 g/l. The diluted mixture was applied at a rate of 450 l/ha to grassland. Excellent weed control of broad-leaved weeds and annual grasses was obtained.

Example 3

By the method of Example 2 a tank mix was prepared containing methabenzthiazuron in a weight ratio of 1.5:1 to the methanesulphonate. The diluted mixture was applied at a rate of 450 l/ha to give rates of 1.5 kg/ha methabenzthiazuron and 1 kg/ha of the methanesulphonate. Excellent control of broad-leaf weeds and grass weeds was obtained.

Examples 4-17

The following compounds were admixed with 2-ethoxy-2,3-dihydro-3,3-dimethylbenzofuran-5-yl methanesulphonate according to the appropriate method of Examples 1 and 2 depending on the physical form of the compound employed. The ratios were calculated such that the amount of each compound set out in the table below was admixed with 1.7 kg of the methanesulphonate. The diluted mixtures were applied to grassland at a rate sufficient to apply 1.7 kg/ha of the methanesulphonate, to give the particular effects stated below.

| Example No | Compound | Amount (kg) | Particular effect |
|---|---|---|---|
| 4 | benazolin | 0.5 | Excellent blw control |
| 5 | bensulide | 8.0 | Excellent grass weed control |
| 6 | bromfenoxim | 1.0 | Excellent blw control |
| 7 | bromoxymil octanoate | 0.25 | Excellent blw control |
| 8 | chlortoluron | 1.0 | Excellent grass weed control |
| 9 | dichlorprop | 1.0 | Excellent blw control |
| 10 | dinoseb acetate | 1.0 | Excellent blw control |
| 11 | dinoterb | 0.75 | Excellent blw control |
| 12 | flamprop-isopropyl | 0.6 | Excellent grass weed control (especially _Avena_ spp) |
| 13 | isomethiozin | 2.0 | Excellent grass weed and blw control |
| 14 | prometon | 1.0 | Excellent grass weed and blw control |
| 15 | 2,4,5-T | 0.4 | Excellent blw control |
| 16 | pendimethalin | 0.75 | Excellent grass weed control |
| 17 | ethalfluralin | 0.75 | Excellent grass weed control |

Examples 18-51

The following compounds were applied to grassland sequentially with 1.7 kg/ha of 2-ethoxy-2,3-dihydro-3,3-dimethylbenzofuran-5-yl methanesulphonate. Unless otherwise stated, the methanesulphonate was applied in the low-growth season (autumn, winter or early spring) and the other compound was applied in late spring or early summer.

| Example No | Compound | Rate (kg/ha) | Particular effect/remarks |
|---|---|---|---|
| 18 | asulam | 1.2 | Excellent grass weed control expecially of Holcus lunatus, Poa trivialis, Agrostis spp and Rumex spp) |
| 19 | benazolin | 0.5 | Excellent blw control |
| 20 | benefin | 1.5 | Benefin applied early autumn followed by the methanesulphonate. Excellent grass-weed and blw control |
| 21 | bensulide | 10.0 | Employed in same manner as benefin. Excellent grass-weed control |
| 22 | benzoylprop-ethyl | 1.0 | Excellent grass-weed control (especially Avena spp) |
| 23 | bromfenoxim | 1.5 | Excellent blw control |
| 24 | bromoxynil | 0.6 | Excellent blw control when applied before or after the methanesulphonate |
| 25 | bromoxynil-octanoate | 0.4 | Excellent blw control when applied before or after the methanesulphonate |
| 26 | chlorfenprop-methyl | 2.0 | Excellent grass-weed control (especially Avena spp) |

| Example No | Compound | Rate (kg/ha) | Particular effect/remarks |
|---|---|---|---|
| 27 | chlortoluron | 1.0 | Excellent grass-weed control when applied before or after the methanesulphonate |
| 28 | dicamba | 0.1 | Excellent blw control |
| 29 | 2,4-D | 0.25 | Excellent blw control |
| 30 | 2,4-DB | 1.0 | Excellent blw control |
| 31 | dichlorprop | 2.0 | Excellent blw control |
| 32 | difenzoquat | 1.0 | Excellent grass-weed control |
| 33 | dinoseb acetate | 2.0 | Excellent blw control when applied before or after the methanesulphonate |
| 34 | dinoterb | 1.0 | Excellent blw control when applied before or after the methanesulphonate |
| 35 | fenoprop | 1.0 | Excellent blw control |
| 36 | flamprop-isopropyl | 0.6 | Excellent grass-weed control |
| 37 | glyphosate | 1.5 | Glyphosate applied prior to the methanesulphonate. Excellent grass-weed and blw control |
| 38 | isomethiozin | 2.0 | Excellent grass weed and blw control |
| 39 | MCPA | 1.0 | Excellent blw control |
| 40 | MCPB | 1.5 | Excellent blw control |
| 41 | mecoprop | 2.0 | Excellent blw control |
| 42 | methabenz-thiazuron | 2.0 | Excellent grass-weed and blw control when applied prior to the methanesulphonate. |
| 43 | neburon | 2.5 | Excellent grass and blw control |

| Example No | Compound | Rate (kg/ha) | Particular effect/remarks |
|---|---|---|---|
| 44 | perfluidone | 2.0 | Excellent grass-weed and blw control when applied pre-emergence of the weeds and prior to the methanesulphonate |
| 45 | picloram | 0.03 | Excellent blw control |
| 46 | prometon | 2.0 | Excellent grass weed and blw control |
| 47 | simazine | 1.0 | Excellent blw control |
| 48 | 2,4,5-T | 0.75 | Excellent blw control |
| 49 | 2,3,6-TBA | 0.025 | Excellent blw control |
| 50 | pendimethalin | 1.0 | Excellent grass weed control |
| 51 | ethalfluralin | 1.0 | Excellent grass weed control |

## Claims

1. A method of combating weeds at a locus infested or liable to be infested with them, characterised in that there is applied to the locus an effective amount of

(a) 2-ethoxy-2,3-dihydro-3,3-dimethylbenzofuran-5-yl methane-sulphonate, together or sequentially with

(b) one or more of asulam (or a salt thereof), benazolin, bensulide, bromofenoxim, bromoxynil octanoate, chlortoluron, cyanazine, dichlorprop or a salt, ester or amide thereof, dinoseb acetate, dinoterb, ethalfluralin, flamprop-isopropyl, glyphosate, isomethiozin, methabenzthiazuron, prometon, 2,4,5-T or a salt, ester or amide thereof, and pendimethalin,

or sequentially with

(c) one or more of benefin, benzoylprop-ethyl, bromoxynil, chlorfenprop-methyl, cyanazine, dicamba, 2,4-D or a salt, ester or amide thereof, 2,4-DB or a salt, ester or amide thereof, difenzoquat, fenoprop, MCPA or a salt, ester or amide thereof, MCPB or a salt, ester or amide thereof, mecoprop or a salt, ester or amide thereof, neburon, perfluidone, picloram, simazine, 2,4,5-TP or a salt, ester or amide thereof, and 2,3,6-TBA or a salt, ester or amide thereof.

2. A method according to claim 1 wherein from 0.1 to 6 kg of (a) are applied per hectare.

3. A method according to claim 1 or claim 2 wherein from 0.01 to 4.0 kg of (b) or (c) are applied per hectare.

4.    A method according to any of claims 1 to 3 wherein the locus treated is a grass crop.

5.    A method according to claim 4 wherein component (a) is applied during the low-growth stage of the grass.

6.    A method according to any of claims 1 to 5 wherein components (a) and (b) or (c) are employed sequentially and component (a) is applied before component (b) or (c) where that component is or includes asulam, benazolin, benzoylprop-ethyl, bromofenoxim, chlorfenprop-methyl, dicamba, 2,4-D, 2,4-DB, dichlorprop, difenzoquat, fenoprop, flamprop-isopropyl, MCPA, MCPB, mecoprop, picloram, 2,4,5-T or 2,3,6-TBA.

7.    A method according to any of claims 1 to 5 wherein components (a) and (b) or (c) are employed sequentially and component (b) or (c) is applied before component (a) where component (b) or (c) is or includes benefin, bensulide, glyphosate, methabenzthiazuron or perfluidone.

8.    A herbicidal composition, characterised in that it comprises:

(a)   2-ethoxy-2,3-dihydro-3,3-dimethylbenzofuran-5-yl methane-sulphonate and

(b)   one or more of asulam (or a salt thereof), benazolin, bensulide, bromofenoxim, bromoxynil octanoate, chlortoluron, cyanazine, dichlorprop or a salt, ester or amide thereof, dinoseb acetate, dinoterb, ethalfluralin, flamprop-isopropyl, glyphosate, isomethiozin, methabenzthiazuron, prometon, 2,4,5-T and pendimethalin, each of components (a) and (b) being present in an amount of from 1 to 99% by weight of the total amount of (a) and (b), in association with a suitable carrier and/or surface active agent.

9. A herbicidal composition according to claim 8 wherein component (a) is present in an amount of from 40 to 90% by weight of the total amount of (a) and (b).

10. A method according to any of claims 1 to 5 wherein components (a) and (b) are applied by means of a composition according to claim 8 or claim 9.

| | DOCUMENTS CONSIDERED TO BE RELEVANT | | CLASSIFICATION OF THE APPLICATION (Int. Cl.²) |
|---|---|---|---|
| Category | Citation of document with indication, where appropriate, of relevant passages | Relevant to claim | |
| X | RESEARCH DISCLOSURE No. 167, published on March 10, 1978 Industrials Opportunities, HAVANT-HANTS (GB) "Herbicide" (Disclosed anonymously)<br><br>* page 18, abstract nr. 16757 *<br>--- | 1,8 | A 01 N 9/02 |
| X | US - A - 3 992 188 (A. FISCHER)<br><br>* column 1, line 34 *<br>--- | 1,8 | |
| X | NL - A - 74 10 128 (BASF)<br><br>* page 13, line 31; page 111, lines 1-20 *<br><br>& DE - A - 2 343 293<br>--- | 1,8 | **TECHNICAL FIELDS SEARCHED (Int.Cl.²)**<br><br>A 01 N 9/02<br>A 01 N 9/28 |
| X | RESEARCH DISCLOSURE No. 113, published in September 1973, Industrial Opportunities, HAVANT-HANTS (GB) "Herbicide" (disclosed by FISONS)<br><br>* pages 53-54; abstract nr. 11341*<br>--- | 1 | |
| | NL - A - 76 12 370 (FISONS)<br><br>* pages 8 and 9; page 16, claim 9 *<br><br>& FR 2 331 284<br>--- | 1-10 | **CATEGORY OF CITED DOCUMENTS**<br><br>X: particularly relevant<br>A: technological background<br>O: non-written disclosure<br>P: intermediate document<br>T: theory or principle underlying the invention |
| | FR - A - 2 360 252 (FISONS)<br><br>* page 5, lines 27-38; page 6, lines 1-21 *<br>--- | 1-10<br><br>./. | E: conflicting application<br>D: document cited in the application<br>L: citation for other reasons |

&: member of the same patent family, corresponding document

The present search report has been drawn up for all claims

| Place of search | Date of completion of the search | Examiner |
|---|---|---|
| The Hague | 30-08-1979 | PELTRE |

EPO Form 1503.1  06.78

## European Patent Office — EUROPEAN SEARCH REPORT

| Category | Citation of document with indication, where appropriate, of relevant passages | Relevant to claim |
|---|---|---|
| | GB - A - 1 528 024 (FISONS) <br><br> * page 2, lines 60-99 * <br><br> --- | 1-10 |
| A | GB - A - 1 436 327 (FISONS) <br><br> --------- | |

**CLASSIFICATION OF THE APPLICATION (Int. Cl.³)**

**TECHNICAL FIELDS SEARCHED (Int. Cl.³)**

EPO Form 1503.2  06.78